# EUROPÄISCHE PATENTANMELDUNG

(11) **EP 4 356 702 A1**
(43) Veröffentlichungstag der Anmeldung: **24.04.2024**
(21) Anmeldenummer: 23186355.6
(22) Anmeldetag: 19.07.2023
(51) Int. Cl.: A01B 13/08, A01B 15/04, A01B 15/06, A01B 23/02, A01B 39/18

(54) **HACKSCHAR**

(30) Priorität: 18.10.2022 AT 508052022
(71) Anmelder: BOEHLERIT GmbH & Co.KG., 8605 Kapfenberg (AT)
(72) Erfinder: Bärnthaler, Walter, 8641 St. Marein im Mürztal (AT); Burböck, Hannes, 8652 Kindberg/Aumühl (AT)
(74) Vertreter: Wirnsberger & Lerchbaum Patentanwälte OG

(57) **Zusammenfassung**

Die Erfindung betrifft eine Schar, insbesondere Hackschar (1), zum Eingriff in Erdreich, umfassend einen Träger (2), welcher in Arbeitsrichtung schneidaktive äußere Eingriffsbereiche (3) aufweist, wobei der Träger (2) in den äußeren Eingriffsbereichen (3) mit einem oder mehreren Schneidelementen (5) aus einem härteren Material als der Träger (2) bestückt ist, wobei der Träger (2) in Draufsicht v-förmig ausgebildet ist, wobei eine Trägerspitze (8) in Arbeitsrichtung einen vordersten Eingriffsbereich (4) darstellt. Zur Erhöhung der Standzeit ist erfindungsgemäß der Träger (2) an einer Oberseite (9) des Trägers (2) mit einem Steg (10) ausgebildet, wobei der Steg (10) einen stirnseitigen Bereich des Trägers (2) mit einem Befestigungsbereich (11) verbindet.

## Beschreibung

Die Erfindung betrifft eine Schar, insbesondere Hackschar, zum Eingriff in Erdreich, umfassend einen Träger, welcher in Arbeitsrichtung schneidaktive äußere Eingriffsbereiche aufweist, wobei der Träger in den äußeren Eingriffsbereichen mit einem oder mehreren Schneidelementen aus einem härteren Material als der Träger bestückt ist, wobei der Träger in Draufsicht v-förmig ausgebildet ist, wobei eine Trägerspitze in Arbeitsrichtung einen vordersten Eingriffsbereich darstellt.

In der modernen Landwirtschaft spielt eine hohe Produktivität eine große Rolle. Für einen hohen Ertrag ist neben anderen Bedingungen auch eine schnelle und gründliche Bodenaufbereitung ein mitentscheidender Faktor.

Eine hohe Produktivität in der Bodenbearbeitung wird auch durch die Geschwindigkeit bestimmt, mit welcher einzelne Arbeitsschritte bei der Bodenaufbereitung durchgeführt werden können. Je höher allerdings die Geschwindigkeit, umso größer ist auch der Verschleiß eingesetzter Bodenbearbeitungsgeräte wie zum Beispiel Scharen, beispielsweise Gänsefußscharen oder Hackscharen. Um mit dem Verschleiß zurechtzukommen, ist man in jüngeren Entwicklungen dazu übergegangen, entsprechende Bodenbearbeitungsgeräte, die viele Jahrzehnte ausschließlich aus Stahl gefertigt wurden, mit Einsätzen aus Hartmetall zu bestücken. Die Hartmetalleinsätze stellen Schneidelemente dar. Die Schneidelemente werden dabei vorrangig in jenen Bereichen an einem Träger aufgebracht, welche für die Schnittleistung erforderlich sind. Es sind allerdings auch Lösungen bekannt geworden, die in nicht schneidaktiven Bereichen Hartmetalleinsätze aufweisen, um beispielsweise einem Verschleiß durch abgleitendes Erdreich entgegenzuwirken.

Wenngleich mit der Weiterentwicklung zu hartmetallbestückten Bodenbearbeitungsgeräten mit einem Träger aus Stahl erhebliche Fortschritte in der Standzeit erzielt wurden, die so beachtlich sind, dass sich eine Verwendung des an sich deutlich teureren Hartmetalls auch wirtschaftlich rechnet, ist die Standzeit für einzelne Anwendungsfälle nach wie vor zu gering. Auch wenn die Standzeit in vielen Fällen nach oben geht, ist insbesondere bei Hackscharen zu beobachten, dass diese im Bereich einer Spitze des Trägers, aber auch anderen Bereichen des Trägers sehr rasch verschleißen können. Dies hängt mit großen Unterschieden im zu bearbeitenden Boden zusammen: Die Bodenbearbeitung kann sich als leicht bis schwer darstellen, was insbesondere vom Wetter und Saisoneffekten abhängt. Des Weiteren ist auch der Steinbesatz des bearbeiteten Bodens mitentscheidend für den Verschleiß, da der Steinbesatz von sehr wenig bis sehr viel betragen kann. Sind zum Beispiel trockene und harte Bedingungen (Trockenperiode und hoher Steinbesatz) gegeben, verschleißt vor allem eine Spitze des Trägers sehr rasch. Sind hingegen feuchte und weiche Bedingungen gegeben (Regenperioden und wenig Steinbesatz), verschleißt vorrangig der Träger in einem hinteren Bereich, da der Boden wie Schmirgelpapier wirkt. Insgesamt sind somit sehr unterschiedliche Verschleißprofile gegeben, die trotz Bestückung mit Schneidelementen aus einem Hartmetall zu einem unerwartet raschen Versagen des Bodenbearbeitungsgerätes führen können.

Im Rahmen der Erfindung wurden verschiedene Überlegungen angestellt, wie zumindest einzelne dieser Probleme bei Hackscharen adressiert werden können. Eine erste Idee wäre, den Träger stärker auszubilden, was allerdings bei Hackscharen nicht möglich ist. Der Träger einer Hackschare kann in der Praxis maximal eine Dicke von etwa 4 mm bis 5 mm aufweisen. Dies ist dadurch bedingt, dass die Hackscharen für die schneidende Bearbeitung von Unkraut, auch im Bereich von wachsenden Kulturen, verwendet werden und in etwa 2 cm Tiefe Wurzelköpfe von Unkraut abschneiden sollen. Es handelt sich somit um relativ feine, an größeren Bodenbearbeitungsgeräten anbringbare Bodenbearbeitungswerkzeuge, die zudem meist durch Kaltverformung erstellt werden, was eine Trägerdicke aus praktischen Aspekten bei der Herstellung ebenfalls limitiert.

Es wäre wünschenswert, insbesondere einem Verschleiß an einer Oberseite eines Trägers einer Hackschar Einhalt zu gebieten, da ein solcher Verschleiß sehr schnell erfolgen kann und daher dazu führt, dass das an sich teure Hartmetall bzw. Schneideinsätze aus demselben nicht mehr genutzt werden kann. Dies verschiebt dann auch eine Rentabilitätsbetrachtung betreffend den Einsatz des Hartmetalls. Ist nämlich die Standzeit der Hackschar oder allgemein Schar nicht mehr durch Teile aus Hartmetall, sondern aus Stahl bestimmt, ergibt sich ein ungünstiger Materialeinsatz.

Es ist davon ausgehend Aufgabe der Erfindung, eine Schar der eingangs genannten Art, insbesondere Hackschar, derart weiterzubilden, dass eine erhöhte Standzeit der Schar, insbesondere Hackschar, gegeben ist.

Diese Aufgabe wird gelöst, wenn bei einer Schar der eingangs genannten Art der Träger an einer Oberseite des Trägers mit einem Steg ausgebildet ist, wobei der Steg einen stirnseitigen Bereich des Trägers mit einem Befestigungsbereich verbindet.

Erfindungsgemäß kann mit dem an der Oberseite des Trägers vorgesehene Steg eine deutliche Standzeiterhöhung für die Schar, insbesondere in Form einer Hackschar, die im Vergleich mit ähnlichen Bodenbearbeitungsgeräten relativ dünn ausgebildet ist, erreicht werden. Durch die oberseitige Ausbildung mit einem Steg, der einen stirnseitigen Bereich des Trägers mit einem Befestigungsbereich verbindet, wird verhindert, dass abgleitendes Erdreich insbesondere bei fordernden feuchten Bedingungen nicht mehr zu einem vorschnellen Verschleiß des Trägers führen kann. Dabei verbindet der Steg einen vorderen, stirnseitigen Bereich des Trägers mit einem Befestigungsbereich, der dazu eingerichtet ist, die Schar an einem Stiel zu befestigen, der wiederum an einer landwirtschaftlichen Maschine angeordnet wird.

Der Steg kann mit Vorteil im Wesentlichen parallel zur Arbeitsrichtung verlaufen. Im Wesentlichen parallel bedeutet, dass der Steg entlang einer Längsachse des v-förmigen Trägers ausgerichtet ist, aber in einzelnen Teilbereichen auch davon abweichend verlaufen kann.

Der Träger ist üblicherweise aus einem Stahl gebildet. Der Träger ist in der Regel durch eine Wärmebehandlung vergütet, insbesondere gehärtet. Am Träger sind ein oder mehrere Schneidelemente aufgenommen, um eine möglichst lange Standzeit zu erreichen.

Das oder die Schneidelemente sind insbesondere in äußeren Eingriffsbereichen des Trägers angeordnet. Diese äußeren Eingriffsbereiche stellen insbesondere jene Randbereiche des v-förmigen Trägers dar, welche mit dem Erdreich zunächst in Kontakt treten. Ist ein einziges Schneidelement vorgesehen, ist dieses mit Vorteil aus einem Hartmetall gebildet. Analog gilt, dass bei mehreren Schneidelementen mit Vorteil zumindest ein Teil davon, vorzugsweise alle, aus einem Hartmetall gebildet sind. Das zumindest eine Schneidelement ist mit Vorteil aus einem Hartmetall gebildet. Hierfür ist der Träger für die Schneidplatte mit einem geeigneten Plattensitz für dieselbe ausgestattet. Sind mehrere Schneidplatten vorgesehen, kann für jede einzelne Schneidplatte jeweils ein Plattensitz vorgesehen sein. Die Plattensitze sind bevorzugt so ausgelegt, dass die einzelnen Schneidplatten sich nicht unmittelbar berühren, aber so angeordnet sind, dass sich in stirnseitiger Ansicht eine durchgehende Schnittlinie ergibt. Die Schneidelemente bzw. Schneidplatten aus einem Hartmetall können dann in den Plattensitzen durch Löten befestigt werden.

Der Steg kann auf verschiedene Arten ausgebildet sein. In einer besonders günstigen Variante ist der Steg am Träger angeschweißt. Dies erlaubt eine einfache und dauerhafte Befestigung des Steges am Träger.

Der Steg kann in Seitenansicht vollflächig ausgebildet sein. Dies bringt den Vorteil, dass der Steg an dessen Fußseite durchgehend mit dem Träger verbunden sein kann. Insbesondere bei einer geschweißten Verbindung zwischen Steg und Träger kann dann der Steg im Wesentlichen von einer Trägerspitze weg bis hin zum rückseitigen Befestigungsbereich durchgehend stoffschlüssig mit dem Träger verbunden sein.

Der Befestigungsbereich des Trägers ist üblicherweise rückseitig angeordnet und ragt an einer Rückseite des Trägers auf. Üblicherweise umfasst der Befestigungsbereich eine oder mehrere Öffnungen, die zur Durchführung von Befestigungsmitteln zur Befestigung an einem Stiel eingerichtet sind. Dabei kann der Befestigungsbereich im Querschnitt u-förmig ausgebildet sein, sodass der Stiel in den u-förmigen Bereich einführbar und in diesem mit einem oder mehreren Befestigungsmitteln festlegbar ist. Eine u-förmige Ausbildung ist mit Vorteil so getroffen, dass die offene Seite nach hinten zeigt, also entgegen der Arbeitsrichtung positioniert ist.

Der Steg kann insbesondere auch so am Befestigungsbereich anliegen, dass nicht nur mit der Oberseite des Trägers, sondern auch mit dem Befestigungsbereich eine möglichst innige Verbindung gegeben ist. Über eine derartige innige Verbindung können allfällig einwirkende Kräfte gut auf den Befestigungsbereich übergeleitet werden. Besonders bevorzugt ist es, dass der Steg am Befestigungsbereich über zumindest ein Viertel einer stirnseitigen Länge des Befestigungsbereiches anliegt.

Der Träger kann einen abgekanteten Eingriffsbereich aufweisen und im abgekanteten Eingriffsbereich an einer Unterseite mit einer Verstärkung ausgebildet sein. Dadurch wird eine noch höhere Standzeit einer Schar erzielt, insbesondere einer Hackschar, deren Träger eine maximale Dicke von 5 mm aufweist. Bislang hatte sich das Problem ergeben, dass der Träger im abgekanteten Eingriffsbereich zwar mit einem Schneidelement aus einem härteren Material als der Träger bestückt war, allerdings unmittelbar nach dieser bestückten Zone ein Verschleiß zu beobachten war. Da für die Bestückung mit einem Hartmetalleinsatz bzw. Schneidelement ein entsprechender Sitz am Träger geschaffen werden muss, üblicherweise durch Fräsen, erfolgt im abgekanteten Bereich unmittelbar im Anschluss an die bestückte Zone ein relativ rascher Verschleiß. Dies ist dadurch verstärkt, dass der abgekantete Eingriffsbereich für den Einzug in das Erdreich sorgen soll und daher einer besonders großen Beanspruchung unterliegt. Ist nun an der Unterseite des Trägers eine Verstärkung vorgesehen, kann dieser Verschleißerscheinung nachhaltig Einhalt geboten werden.

Die Verstärkung kann grundsätzlich auf beliebige Weise erfolgen. Beispielsweise kann die Verstärkung aus einem oder mehreren Stäben bestehen, welche mit der Unterseite des Trägers verbunden sind. Besonders bevorzugt ist es jedoch, auch der einfachen Ausbildung wegen, wenn die Verstärkung durch eine oder mehrere Aufschweißungen gebildet ist. Aufschweißungen lassen sich relativ einfach und schnell herstellen. Aufschweißungen sind auch ausreichend, beispielsweise durch eine wulstartige Verstärkung der Unterseite, um mit einfachen Mitteln die gewünschte längere Standzeit zu erreichen.

Die Verstärkung an der Unterseite sollte insbesondere auch den Bereich der Abkantung an sich zumindest teilweise abdecken. Bevorzugt erstreckt sich die Verstärkung vom abgekanteten Bereich über eine Abkantungslinie hinweg zu einem gegenüberliegenden Bereich des Trägers, sodass sich eine effiziente Kraftableitung ergibt.

Hartmetall für die Schneidelemente bzw. Schneidplatten kann aus einem Hartstoff wie Wolframcarbid und einem Bindemetall bestehen, wobei das Bindemetall ein oder mehrere Metalle ausgewählt aus der Gruppe bestehend aus Cobalt, Nickel und/oder Eisen umfasst. Besonders bevorzugt kommen solche Hartmetalle zum Einsatz, bei denen der Anteil an Cobalt möglichst minimiert ist. Ein Anteil des Bindemetalls liegt in der Regel zwischen 5 Gewichtsprozent (im Folgenden kurz: Gew.-%) und 15 Gew.-%. Der Rest ist aus dem Hartstoff gebildet. Der Hartstoff besteht bevorzugt aus Wolframcarbid, kann aber auch zusätzlich oder alternativ Titancarbid oder andere Carbide wie Niobcarbid und/oder Tantalcarbid umfassen.

Der Träger ist in Draufsicht bevorzugt v-förmig ausgebildet, wobei eine Trägerspitze in Arbeitsrichtung einen vordersten Eingriffsbereich darstellt. Die Trägerspitze definiert somit den vordersten Punkt in Arbeitsrichtung, an welchen Erdreich mit dem Träger bzw. der Schar in Kontakt tritt. In diesem vordersten Eingriffsbereich ist ein Schneidelement am Träger befestigt. Entlang der sich zu beiden Seiten der Trägerspitze erstreckenden Flügel der v-förmigen Ausbildung sind mit Vorteil weitere Schneidelemente vorgesehen. Diese Schneidelemente können in Arbeitsrichtung betrachtet so nebeneinander angeordnet sein, dass sich bei stirnseitiger Ansicht eine durchgehende Schnittlinie ergibt.

Die v-förmige Ausbildung des Trägers kann so gestaltet sein, dass zwei Flügel der v-förmigen Ausbildung spiegelsymmetrisch zueinander vorliegen. Es ergibt sich dann in Draufsicht ein V, dessen äußere Eingriffsbereiche von Schneidelementen besetzt sind. Die Schneidelemente sind so angeordnet, dass mehr als 70 %, bevorzugt mehr als 80 %, insbesondere mehr als 85 %, beispielsweise 90 % oder mehr des äußeren Eingriffsbereiches oder schneidaktiven Trägerrandes von Schneidplatten besetzt sind. An der gegenüberliegenden, nicht eingriffsaktiven Rückseite sind die zwei Flügel durch einen Befestigungsbereich verbunden. Der Befestigungsbereich ragt von einer übrigen Oberseite des Trägers auf. Da die Trägerspitze den vordersten Eingriffsbereich darstellt und daher einer besonders hohen Belastung unterliegt, ist es besonders bevorzugt, dass die Trägerspitze an der Unterseite mit der Verstärkung verstärkt ist.

Um ein gutes Einziehen der Schar, insbesondere einer Hackschar, in Erdreich zu ermöglichen, ist die Trägerspitze bevorzugt abgekantet. Dies bedeutet, dass der Eingriffsbereich zumindest im Bereich der Trägerspitze relativ zu dem dahinter anschließenden Bereich des Trägers nach unten hin mit einem Winkel abfällt. Dieser Winkel ist in der Regel relativ klein bemessen und beträgt maximal 5°, beispielsweise 1° bis 2,5°. Dies ermöglicht ein besonders gutes Einziehen, bringt allerdings auch eine erhöhte Beanspruchung im Bereich der Abkantung mit sich. Diese erhöhte Beanspruchung kann aber durch die vorgesehene Verstärkung völlig kompensiert werden. Der an sich sensible Bereich hinter dem Schneidelement hält dann erhöhten Belastungen Stand.

Üblicherweise definiert die Trägerspitze einen tiefsten Punkt der Schar, da die Trägerspitze in Arbeitsrichtung den übrigen Schneidbereichen in den äußeren Eingriffsbereichen vorgelagert ist.

Weitere Merkmale, Vorteile und Wirkungen ergeben sich aus dem nachfolgend dargestellten Ausführungsbeispiel. In den Zeichnungen, auf welche dabei Bezug genommen wird, zeigen:
Fig. 1 eine Hackschar nach dem Stand der Technik mit verschlissener Trägerspitze;
Fig. 2 eine Hackschar gemäß dem Stand der Technik mit verschlissener Oberseite;
Fig. 3 eine Hackschar in Draufsicht;
Fig. 4 die Hackschar aus Fig. 3 in einer Seitenansicht;
Fig. 5 die Hackschar aus Fig. 3 in einer Ansicht von unten;
Fig. 6 bis Fig. 9 eine weitere Variante einer Schar mit einem Steg;
Fig. 10 eine Hackschar befestigt an einem Stiel in einer Seitenansicht;
Fig. 11 die Hackschar samt Stiel gemäß Fig. 10 in einer stirnseitigen Ansicht.

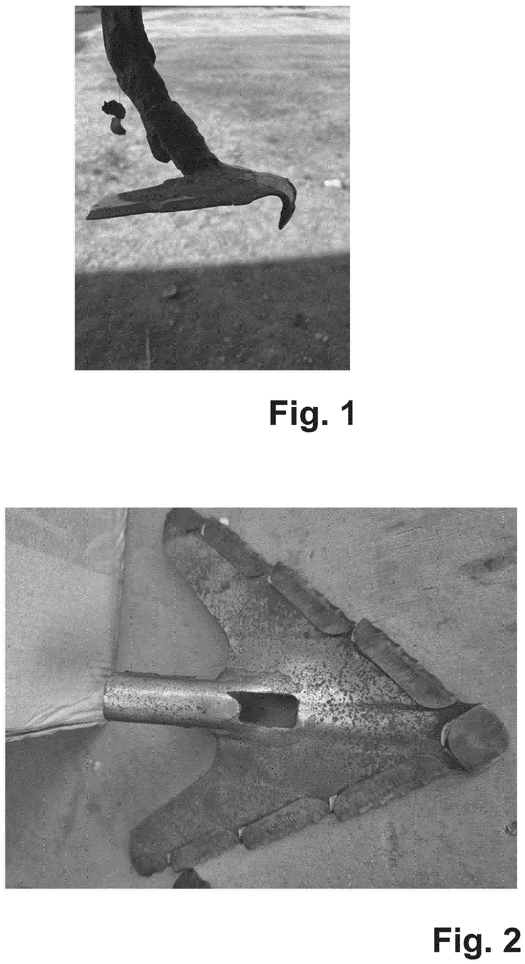

In Fig. 1 und Fig. 2 sind zwei Hackscharen gezeigt, welche jeweils aufgrund von Materialverschleiß unbrauchbar geworden sind, obwohl beide Hackscharen mit Schneidplatten besetzt sind, welche für einen weiteren Einsatz der Hackscharen noch ausreichend gut ausgebildet wären. Bei der Verschleißerscheinung in Fig. 1 besteht die Verschleißerscheinung in einer umgebogenen Spitze der Hackschar. Im Bereich der Spitze ist die Hackschar durch den Eingriff in das Erdreich sehr stark belastet. Da für eine Schneidplatte im Bereich der Spitze ebenso wie für die anderen Schneidplatten ein Plattensitz mittels einer Einfräsung zu schaffen ist, ist der Träger in diesem Bereich relativ schwach ausgebildet. Dies führt dazu, dass nach der Spitze des Trägers eine Schwachstelle gegeben ist, welche zu dem gezeigten Schadensbild führt.

Während Versagen gemäß Fig. 1 insbesondere bei hartem Boden auftreten kann, können auch weiche Bodenverhältnisse zu einem Materialversagen führen, in diesem Fall aber, wie in Fig. 2 ersichtlich, in einem Ansatzbereich zur Befestigung an einem Stiel. Weiche Beschaffenheit des zu bearbeitenden Erdreichs kann dazu führen, dass das über die Hackschar abgeführte Erdreich mit derart hoher Wirkung an der Hackschar reibt, der Abrieb zur Ausbildung von Löchern führt. Die Löcher befinden sich im Bereich der stärksten Beanspruchung.

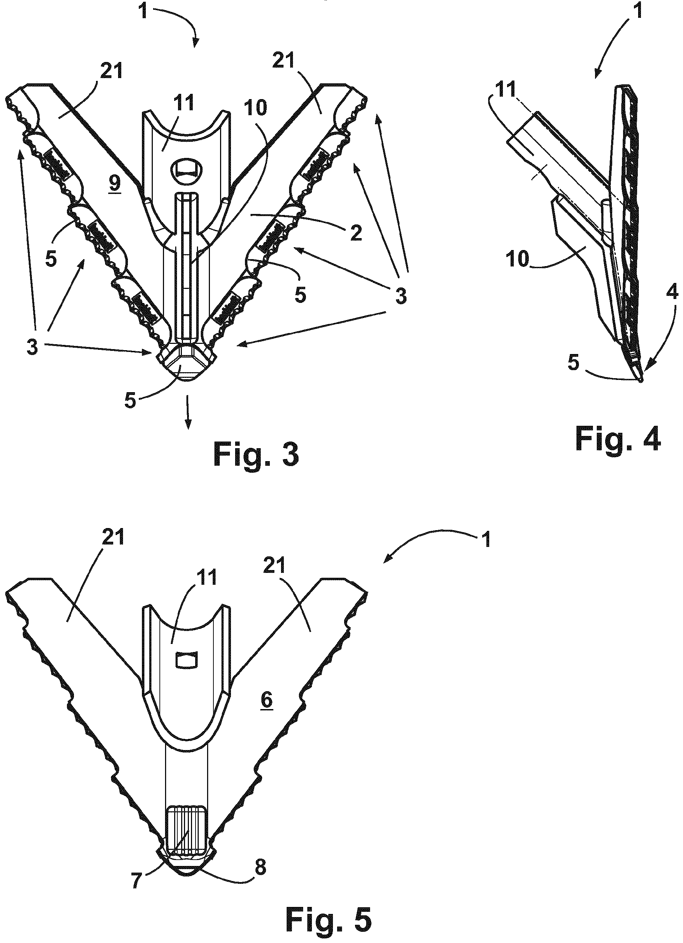

In Fig. 3 bis Fig. 5 ist eine erfindungsgemäße Hackschar 1 dargestellt. Wie in Fig. 3 ersichtlich ist, ist die Hackschar mit einem Träger 2 ausgebildet. Der Träger 2 ist in Draufsicht im Wesentlichen v-förmig ausgebildet. Der Träger 2 umfasst zwei spiegelsymmetrisch angeordnete Flügel 21. Die Flügel 21 definieren in Arbeitsrichtung (angedeutet durch den Pfeil in Fig. 3) äußere Eingriffsbereiche 3. Diese äußeren Eingriffsbereiche 3 sind mit Schneidelementen 5 bzw. Schneidplatten besetzt. Im gegenständlichen Ausführungsbeispiel sind zwei Arten von Schneidplatten vorgesehen, nämlich etwa längliche Schneidplatten mit einzelnen in Arbeitsrichtung positionierten Schneidzähnen, sowie eine davon verschiedene Schneidplatte, die im Bereich einer Trägerspitze 8, einem vordersten Eingriffsbereich der Hackschar 1, angeordnet ist. In dem der Trägerspitze 8 gegenüberliegenden rückseitigen Bereich liegt ein Befestigungsbereich 11 vor, welcher die beiden Flügel 21 miteinander verbindet. Der Befestigungsbereich 11 ist mit den Flügeln 21 integral ausgebildet. Insbesondere kann der Träger 2 aus einem einzigen Stück aus einem Stahl gefertigt sein, insbesondere durch Kaltverformung.

Wie in Fig. 4 ersichtlich ist, ist die Trägerspitze 8 derart abgekantet, dass die Trägerspitze 8 einen tiefsten Punkt der Hackschar 1 definiert. In einem vordersten, abgekanteten Eingriffsbereich 4 greift die Trägerspitze 8 in Arbeitsrichtung zunächst in das Erdreich ein, ehe die übrigen Schneidelemente 5, die in den äußeren Eingriffsbereichen 3 vorliegen, ebenso mit dem Erdreich in Eingriff kommen und auch abgekantet sein können. Die Hackschar 1 ist dabei insbesondere dafür ausgelegt, Unkraut durch einen geeigneten Schnitt etwa 2 cm unterhalb der Erdoberfläche unschädlich zu machen. Dabei kann die Hackschar 1 auch dann eingesetzt werden, wenn ein Kulturbestand schon sichtbar ist und zwischen einzelnen Pflanzenreihen Unkraut unschädlich gemacht werden soll, um für die eigentlichen Kulturpflanzen mehr Nährstoffe zur Verfügung zu haben und damit einen besseren Ertrag zu erzielen.

An einer Unterseite 6 ist der Träger mit einer Verstärkung 7 ausgebildet, wie dies in Fig. 5 ersichtlich ist. Die Verstärkung 7 kann insbesondere durch eine Aufschweißung gebildet sein. Die Verstärkung 7 ist so dimensioniert, dass das in Fig. 1 ersichtliche Schadensbild vermieden wird. Dabei ist es ausreichend, dass die Verstärkung 7 so ausgelegt ist, dass die einzelnen Schneidelemente 5 bis zur Funktionsuntüchtigkeit verwendet werden können. Anschließend spielt es auch keine Rolle mehr, wenn die Trägerspitze 8 eine Verbiegung erfährt.

Wie in Fig. 3 ersichtlich ist, ist an einer Oberseite 9 des Trägers 2 ein Steg 10 vorgesehen. Mit dem Steg 10 wird das in Fig. 2 ersichtliche Schadensbild adressiert: Durch den Steg 10 ist im Bereich der Oberseite 9 des Trägers 2 eine zusätzliche Verstärkung gegeben. Diese zusätzliche Verstärkung sorgt dafür, dass das Erdreich über die Hackschar 1 abgleiten kann, ohne dabei bei ungünstigen Bodenbedingungen für die Ausbildung eines Loches zu sorgen. Der Steg 10 kann ebenso wie die an der Unterseite des Trägers vorgesehene Verstärkung 7 aufgeschweißt sein. Dabei ist der Steg 10 wiederum so optimiert, dass ein Materialeinsatz minimiert ist, aber der Träger 2 solange intakt bleibt, als die Schneidelemente 5 noch brauchbar sind.

Mit der in Fig. 3 bis Fig. 5 dargestellten Variante einer Hackschar 1 können mehrere Standzeitprobleme beseitigt werden. Durch die Verstärkung 7 an der Unterseite des Trägers 2 ist im abgekanteten Eingriffsbereich 4 eine solche Verstärkung gegeben, dass das Schadensbild nach Fig. 1 vermieden ist. Die Ausbildung mit dem Steg 10 an der Oberseite sorgt dafür, dass das Schadensbild gemäß Fig. 2 vermieden wird. Somit ist eine Hackschar 1 gleichzeitig bezüglich mehrerer Verschleißerscheinungen widerstandsfähig.

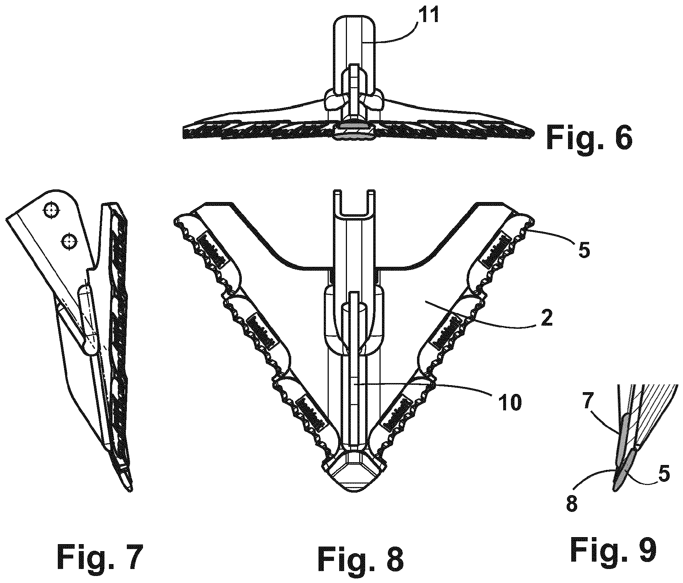

In Fig. 6 bis Fig. 9 ist eine weitere Variante einer Hackschar 1 mit einem Steg 10 dargestellt. In dieser Variante ist der Steg höher und damit grundsätzlich stärker ausgebildet. Grundsätzlich kann der Steg 10 auf beliebige Arten realisiert werden. Günstig ist es, wenn der Steg 10 allgemein im Wesentlichen parallel zu einer Längsachse des v-förmigen Trägers 2 ausgerichtet ist. Dennoch können insbesondere seitlich auch Nähte aus Aufschweißungen davon abweichen. Günstig ist des Weiteren, wenn der Steg 10 vollflächig an der Oberseite 6 des Trägers 2 anliegt. Dies gilt analog für den Befestigungsbereich 11. Idealerweise liegt der Steg 10 unabhängig von einer konkreten Ausbildungsvariante in etwa vor der Trägerspitze 8 weg bis hin auf eine vorbestimmte Höhe des Befestigungsbereiches 11 an der zu verbessernden Hackschar an. Eine Anbringung des Steges 10 kann mit Vorteil durch Aufschweißen erfolgen. Möglich und denkbar ist es aber auch, dass die Hackschar 1 noch ohne Schneidelemente 5, aber bereits mit dem Steg 10 integral durch Umformen ausgebildet wird, insbesondere durch Kaltumformen. Anschließend werden dann die Schneidelemente 5 am Träger 2 angeordnet, wofür es gegebenenfalls noch erforderlich sein kann, durch Fräsen oder andere spanabhebende Operationen Plattensitze für die Schneidelemente 5 zu schaffen.

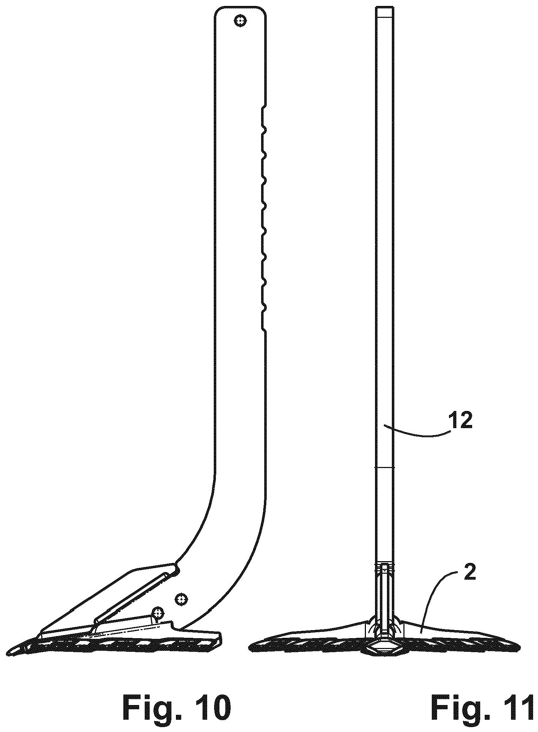

In Fig. 10 und Fig. 11 ist ein Träger 2 befestigt an einem Stiel 12 dargestellt. Der Stiel 12 wiederum wird an einer landwirtschaftlichen Maschine, in der Regel eine Zugmaschine, befestigt, mit welcher Erdreich bearbeitet wird.

## Patentansprüche

1. Schar, insbesondere Hackschar (1), zum Eingriff in Erdreich, umfassend einen Träger (2), welcher in Arbeitsrichtung schneidaktive äußere Eingriffsbereiche (3) aufweist, wobei der Träger (2) in den äußeren Eingriffsbereichen (3) mit einem oder mehreren Schneidelementen (5) aus einem härteren Material als der Träger (2) bestückt ist, wobei der Träger (2) in Draufsicht v-förmig ausgebildet ist, wobei eine Trägerspitze (8) in Arbeitsrichtung einen vordersten Eingriffsbereich (4) darstellt, **dadurch gekennzeichnet, dass** der Träger (2) an einer Oberseite (9) des Trägers (2) mit einem Steg (10) ausgebildet ist, wobei der Steg (10) einen stirnseitigen Bereich des Trägers (2) mit einem Befestigungsbereich (11) verbindet.

2. Schar nach Anspruch 1, **dadurch gekennzeichnet, dass** der Steg (10) im Wesentlichen parallel zur Arbeitsrichtung verläuft.

3. Schar nach Anspruch 1 oder 2, **dadurch gekennzeichnet, dass** der Träger (2) aus einem Stahl gebildet ist.

4. Schar nach einem der Ansprüche 1 bis 3, **dadurch gekennzeichnet, dass** das Schneidelement (5) oder bei mehreren Schneidelementen (5) zumindest ein Teil der Schneidelemente (5) aus einem Hartmetall gebildet sind.

5. Schar nach einem der Ansprüche 1 bis 4, **dadurch gekennzeichnet, dass** das der Steg (10) am Träger (2) aufgeschweißt ist.

6. Schar nach einem der Ansprüche 1 bis 5, **dadurch gekennzeichnet, dass** der Befestigungsbereich (11) am Träger (2) rückseitig und aufragend angeordnet ist.

7. Schar nach Anspruch 6, **dadurch gekennzeichnet, dass** der Befestigungsbereich (11) eine oder mehrere Öffnungen (12) aufweist, die zur Durchführung von Befestigungsmitteln zur Befestigung an einem Stiel (13) eingerichtet sind.

8. Schar nach einem der Ansprüche 1 bis 7, **dadurch gekennzeichnet, dass** der Steg (12) am Befestigungsbereich (11) über zumindest ein Viertel einer stirnseitigen Länge des Befestigungsbereiches (11) anliegt.

9. Schar nach einem der Ansprüche 1 bis 8, **dadurch gekennzeichnet, dass** der Träger (2) einen abgekanteten Eingriffsbereich (4) aufweist und im abgekanteten Eingriffsbereich (4) an einer Unterseite (6) mit einer Verstärkung (7) ausgebildet ist.

10. Schar nach Anspruch 9, **dadurch gekennzeichnet, dass** der Träger (2) eine abgekantete Trägerspitze (8) aufweist, wobei die Trägerspitze (8) an der Unterseite (6) mit der Verstärkung (7) verstärkt ist.

11. Schar nach Anspruch 10, **dadurch gekennzeichnet, dass** die Trägerspitze (8) einen tiefsten Punkt der Schar definiert.
